# EUROPÄISCHE PATENTSCHRIFT

(11) **EP 1 136 448 B1**
(45) Veröffentlichungstag und Bekanntmachung des Hinweises auf die Patenterteilung: **14.09.2005**
(21) Anmeldenummer: 00106107.6
(22) Anmeldetag: 21.03.2000
(51) Int. Cl.: C02F 3/20

(54) **Vorrichtung zum Belüften von Wasser**
Apparatus for the aeration of water
Dispositif pour l'aération de l'eau

(43) Veröffentlichungstag der Anmeldung: 26.09.2001
(73) Patentinhaber: Jäger, Andreas, Dr., 30559 Hannover (DE)
(72) Erfinder: Jäger, Andreas, Dr., 30559 Hannover (DE)
(74) Vertreter: Depmeyer, Jochen

(56) Entgegenhaltungen:
- US-A- 5 234 632
- US-A- 5 304 301
- US-A- 5 846 412

## Beschreibung

Die Erfindung betrifft eine Vorrichtung zum feinblasigen Belüften vom Wasser mit einem Stützrohr und einem darauf befindlichen, mit feinen Schlitzen versehenen, aus Gummi od. dgl. bestehenden, das Stützrohr umschließenden Mantel, der an seinen Enden durch ihn umfassende Schellen fixiert ist, wobei das Stützrohr an einer Halterung befestigt ist, von der aus zwischen Mantel und Stützrohr vorgespannte Luft geleitet wird, wobei das Stützrohr in seine Halterung eingeschoben ist und das freie Ende des Mantels mittels Schelle auf dem Stützrohr befestigt ist.

In bekannter Weise sind diese Halterungen an einem Verteilerrohr gelagert, dem eine Vielzahl von Halterungen und Stützrohre mit geschlitzten Mänteln zugeordnet sind. Dabei erstrecken sich die Stützrohre im Winkel, und zwar vorzugsweise rechtwinkelig zur Verteilerleitung, um so eine größere Anzahl Stützrohre mit den geschlitzten Mänteln auf engem Raum unterbringen zu können.

Eine Vorrichtung der eingangs genannten Art ist aus der US 5,846,412 bekannt. Bei dieser Vorrichtung weist die Halterung ein T-Stück auf, in das zwei einander gegenüber angeordnete Stützrohre mit ihren Enden eingeschoben sind. Die Stützrohre sind an ihren freien Enden geschlossen, der Transport der Luft unter den Mantel erfolgt über das Innere der Stützrohre.

Es ist ferner bekannt, die Stützrohre geflutet zu betreiben, um unnötige Auftriebskräfte auszuschließen, jedoch sind alle Stützrohre fest mit der Halterung und diese wiederum unverrückbar mit dem Verteilerrohr verbunden. Im allgemeinen werden dazu Verschraubungen verwendet. Derartige Vorrichtungen sind aus der US 5,234,632 und der US 5,304,301 bekannt. In der US 5,304,301 ist eine nicht gattungsgemäße Vorrichtung zum Belüften von Wasser beschrieben, bei der ein Teil der Halterung Nuten aufweist, die zum Transport der Luft zum Mantel dienen.

Oft besteht jedoch der Wunsch, bei einem Verteilerrohr Abzweigungen bzw. Stützrohre mit Mänteln unterschiedlicher Länge zu benutzen, wenn dies z.B. aus räumlichen Gründen zweckmäßig erscheint. Dies trifft sowohl für die an einem Verteilerrohr paarweise gegenüber liegenden, fluchtenden Stützrohre als auch für in Längsrichtung der Verteilerrohre aufeinander folgenden Stützrohre zu.

Der Erfindung liegt demgemäß die Aufgabe zugrunde, die Verbindung der Stützrohre mit ihren Halterungen so zu vereinfachen, dass für die Stützrohre handelsübliche - meist aus hartem Kunststoff bestehende - Rohre benutzt werden können, die dann ohne weiteres mit gleicher oder unterschiedlicher Länge eingesetzt werden können.

Zur Lösung dieser Aufgabe ist erfindungsgemäß das innere Ende des Mantels mittels Schelle auf der Halterung befestigt. Die Halterung weist innen Vorsprünge auf, vorzugsweise in Form von Rippen, in der Weise, dass die zwischen den Vorsprüngen befindlichen Räume als Luftzuführungskanäle dienen.

Unter diesen Voraussetzungen können an sich beliebig lange bzw. beliebig kurze Stützrohre benutzt werden, denen dann die aus einem Elastomer bestehenden, entsprechend abgelängten Mäntel zugeordnet werden. Die Tatsache, dass die Mäntel an einem Ende (am freien Ende der Vorrichtung) am Stützrohr befestigt, hingegen am inneren (d.h. der Halterung zugekehrten) Ende an der Halterung befestigt sind, führt zu einer gewünschten Stabilisierung des Stützrohres in der Weise, dass das Stützrohr unerwünschte Längsverschiebungen nicht ausführen kann. Unter diesen Bedingungen ist es sogar möglich, lediglich auf einer Seite eines Verteilerrohres einen Mantel mit zum Austritt der Luftbläschen geeigneten Schlitzen zu versehen.

Um sicherzustellen, dass bei der an sich schwimmenden Lagerung des Stützrohres dieses keine ungewollten Lateralbewegungen ausführen kann, gleichzeitig aber zu gewährleisten, dass die vorgespannte Luft von der Verteilerleitung über die Halterung zwischen das Stützrohr und den Mantel gelangen kann, ist die dem Stützrohr zugekehrte Fläche der Halterung mit Vorsprüngen oder Kanälen versehen.

Eine solche Ausbildung der Vorrichtung ermöglicht vergleichsweise lange Stützrohre, wobei Stützrohre mit einer Länge von 4 - 8 m möglich sind. Bei derart langen Stützrohren können schellenartige Bodenverankerungen benutzt werden, um Schwingungen auszuschalten bzw. Verformungen entgegenzuwirken.

Die Verbindung zwischen dem Verteilerrohr und der Halterung kann an sich beliebig gestaltet werden; vorzugsweise kommen jedoch teilbare Schellen in Betracht, um eine Lösbarkeit sicherzustellen.

Weitere Einzelheiten der Erfindung werden anhand der Zeichnung erläutert, in der ein Ausführungsbeispiel der Erfindung dargestellt ist. Es zeigen :
Fig. 1 im unteren Teil einen Längsschnitt durch eine Belüftungvorrichtung und im oberen Teil die zugehörige Verteilerleitung im Querschnitt,
Fig. 2 einen Teilschnitt durch die Vorrichtung gemäss Fig. 1 nach der Linie II - II und
Fig. 3 eine Teildraufsicht auf den Wirkbereich der Vorrichtung gemäss Fig. 1 im Sinne des Pfeiles III gesehen.

Ein z.B. aus einem hart eingestellten Kunststoff bestehendes Verteilerrohr 1 zum Zuführen vorgespannter Luft weist an seiner Unterseite eine Durchbrechung 2 auf, in die abgedichtet ein Stutzen 3 hinjeinragt. Der Stutzen 3 ist Bestandteil eines Unterteils 4 einer geteilten Schelle 5 mit Gelenkstelle 6 und Verschluss 7 zum Zusammenhalten der beiden Schellenteile.

Das Unterteil 4 geht einstückig in eine Halterung 8 über, die zu beiden Seiten in einen etwa rohrförmigen Abschnitt 9, 10 übergehen, die je die Schelle 5 seitlich überragen und sich im rechten Winkel zum Verteilerrohr 1 erstrecken..

An ihrer Innenseite sind die Abschnitte 9, 10 mit Vorsprüngen in Form von axial verlaufenden Rippen 11 versehen, wobei der durch die Vorsprünge bestimmte lichte Durchgangsquerschnitt in den Abschnitten 9, 10 dem Aussendurchmesser eines aus hartem Kunststoff bestehenden Stützrohres 12 entspricht.

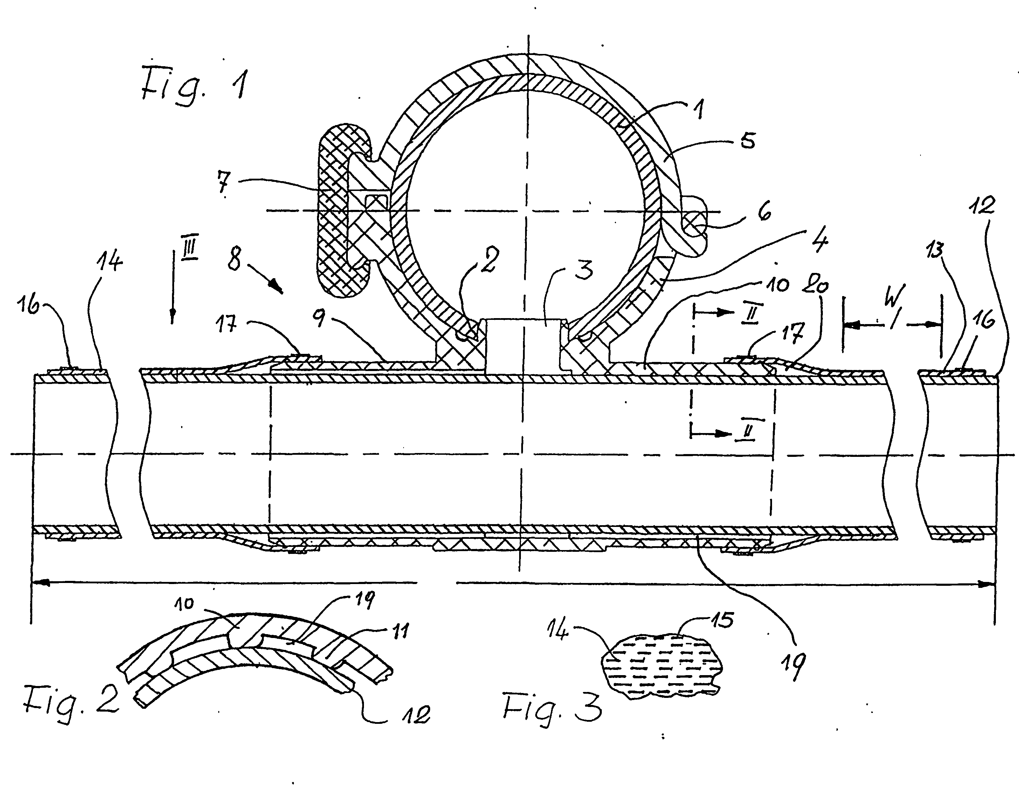

Demgemäss kann das Stützrohr 12 beliebig weit eingeschoben und so symmetrisch, aber auch asymmetrisch in Bezug auf die Halterung 8 angeordnet werden. Das Stützrohr 12 ist an beiden Enden von einem dünnen, membranartigen Mantel 13, 14 umschlossen, der gemäss Fig. 3 im Wirkbereich W mit einer grossen Zahl feiner Schlitze 15 versehen, um den Austritt feiner Bläschen zu ermöglichen.

Zur Stabilisierung des an sich schwimmend gelagerten Stützrohres 12 werden die freien Enden beider Mäntel 13, 14 durch Schellen 16 mit den freien Enden des Stützrohres 12 verbunden. Die inneren Enden der Mäntel 13, 14 werden hingegen auf den Enden der Abschnitte 9, 10 ebenfalls durch Schellen 17 fest verbunden. Somit ist das durchgehende Stützrohr 12 gegen axiale Verlagerungen ausreichend gesichert.

Die vorgespannte Luft gelangt aus der Verteilerrohr 1 über den Stutzen 3 und die zwischen den Rippen 11 befindlichen Kanäle 19 in den Raum bei 20 und von dort aus zwischen Mantel 13, 14 und Stützrohr 12. Damit kann die Luft über die Schlitze 15 in das Wasser eintreten.

Für den Fall, dass in Bezug auf das Verteilerrohr 1 lediglich eine einseitige Belüftung stattfinden soll, wird ein ganz kurz gehaltener Mantel 13 bzw. benutzt, der zwar mittels Schellen 16, 17 befestigt wird, jedoch keine Schlitze 15 aufweist.

## Patentansprüche

1. Vorrichtung zum feinblasigen Belüften vom Wasser mit einem Stützrohr und einem darauf befindlichen, mit feinen Schlitzen versehenen, aus Gummi. bestehenden, das Stützrohr umschließenden Mantel, der an seinen Enden durch ihn umfassende Schellen fixiert ist, wobei das Stützrohr an einer Halterung befestigt ist, von der aus zwischen Mantel und Stützrohr vorgespannte Luft geleitet wird, wobei das Stützrohr (12) in seine Halterung (8) eingeschoben ist und das freie Ende des Mantels (13, 14) mittels Schelle (16) auf dem Stützrohr befestigt ist, **dadurch gekennzeichnet, dass** das innere Ende des Mantels (13,14) mittels Schelle (17) auf der Halterung befestigt ist, und dass die Halterung (8) innen Vorsprünge, vorzugsweise in Form von Rippen (11), aufweist in der Weise, dass die zwischen ihnen befindlichen Räume als Luftzuführkanäle (19) dienen.

2. Vorrichtung nach Anspruch 1, **dadurch gekennzeichnet, dass** auf einer Seite der Halterung (8) ein Mantel (14) gelagert ist, der vergleichsweise kurz ist und keine Schlitze (15) aufweist.

3. Vorrichtung nach Anspruch 1, **dadurch gekennzeichnet, dass** für die ausladenden Enden der Stützrohre (12) schellenartige Bodenverankerungsmittel vorgesehen sind.

4. Vorrichtung nach Anspruch 1, **dadurch gekennzeichnet, dass** das Stützrohr (12) durch seine Halterung (8) einstückig hindurchgeführt ist.

## Claims

1. Apparatus for the ultrafine aeration of water, said apparatus having a supporting tube and a casing situated on said tube, said casing being provided with narrow slots, being formed from rubber or the like, surrounding the supporting tube and being fixed at its ends by clamps which surround it, the supporting tube being secured on a holder, from which air is conducted, such air being pressurised between casing and supporting tube, the supporting tube (12) being inserted into its holder (8), and the free end of the casing (13, 14) being secured on the supporting tube by means of clamp (16), **characterised in that** the inner end of the casing (13, 14) is secured on the holder by means of clamp (17), and **in that** the holder (8) is provided internally with projections, preferably in the form of ribs (11), in such a manner that the spaces between the spacer members serve as air supplying channels (19).

2. Apparatus according to claim 1, **characterised in that** a casing (14) is mounted on one side of the holder (8), said casing being comparatively short and having no slots (15).

3. Apparatus according to claim 1, **characterised in that** clamp-like ground anchoring means are provided for the protruding ends of the supporting tubes (12).

4. Apparatus according to claim 1, **characterised in that** the supporting tube (12) is integrally traversed by its holder (8).

## Revendications

1. Dispositif d'insufflation de bulles fines dans de l'eau, comprenant un tube support et une enveloppe se trouvant dessus, munie de fentes fines, en caoutchouc ou analogue, entourant le tube support et immobilisée à ses extrémités par des colliers qui l'enserrent , le support étant fixé à une fixation de laquelle de l'air ayant subi une détente préalable est envoyé entre l'enveloppe et le tube support, le tube (12) support étant inséré dans sa fixation (8) et l'extrémité libre de l'enveloppe (13, 14) étant fixée au moyen d'un collier (16) au tube support, **caractérisé en ce que** l'extrémité intérieure de l'enveloppe (13, 14) est fixée au moyen d'un collier (17) de fixation et **en ce que** la fixation (8) a des saillies intérieures, de préférence sous la forme de nervures (11), de façon à ce que les espaces se trouvant dans les entretoises servent de canaux (19) d'apport d'air.

2. Dispositif suivant la revendication 1, **caractérisé en ce que** une enveloppe (14), qui est relativement courte mais qui n'a pas de fente (15), est montée d'un côté de la fixation (8).

3. Dispositif suivant la revendication 1, **caractérisé en ce qu'**il est prévu pour les extrémités de décharge des tubes (12) d'appui, des moyens d'ancrage au sol, du type à collier.

4. Dispositif suivant la revendication 1, **caractérisé en ce que** le tube (12) d'appui passe d'un seul tenant à travers sa fixation (8).
